# EUROPEAN PATENT APPLICATION

(11) **EP 4 671 284 A1**
(43) Date of publication of application: **31.12.2025**
(21) Application number: 24185129.4
(22) Date of filing: 27.06.2024
(51) Int. Cl.: C08F 2/48, C08L 33/08, G02B 1/04

(54) **CURABLE SPECTACLE LENS MATERIAL**

(71) Applicant: Carl Zeiss Vision International GmbH, 73430 Aalen (DE)
(72) Inventor: Chen, Fang, Tonsley, 5042 (AU); Adelnia, Hossein, Tonsley, 5042 (AU); Puetz, Joerg, 73430 Aalen (DE); Diggins, David, Tonsley, 5042 (AU); Haidl, Markus, 73430 Aalen (DE); Gloege, Thomas, 73430 Aalen (DE)
(74) Representative: Carl Zeiss AG - Patentabteilung

(57) **Abstract**

A curable composition suitable for producing a spectacle lens material comprising bisphenol fluorene difunctional (meth)acrylate, monofunctional aromatic (meth)acrylate, and other (meth)acrylate.

## Description

Curing of spectacle lens materials by UV, etc. is faster, more efficient, and energy saving compared to conventional methods. However, developing curable material suitable for producing a spectacle lens, especially a spectacle lens having a high refractive index and proper mechanical properties, is challenging as not many curable monomers can deliver high refractive index as well as mechanical properties suitable for spectacle lens at the same time.

EP 0 598 552 B1 provides a cross-linkable polymer casting composition suitable for use in the formation of an optical article. This is achieved by the composition comprising the combination of a fluorene diacrylate or dimethacrylate monomer and a comonomer including a polymerizable double bond. However, this composition has a maximum refractive index of 1.582 and fails to provide higher refractive index. Therefore, there is a need for a novel casting composition delivering even higher refractive index.

Although not directly relevant to the present invention, WO 2018/122748 discloses curable high refractive index ink compositions comprising at least one aromatic (meth)acrylate, at least one multifunctional (meth)acrylate with heteroaromatic groups or fused aromatic groups which are optically clear and have high refractive index. WO 2018/122748 aims to provide curable compositions that are printable via inkjet printing, and thus the materials of WO 2018/122748 are not meant to produce a spectacle lens material by being cured in a spectacle lens mold. That is, the technical field of this invention and the properties of the composition required for the application to the outstanding technical field are completely different from the present invention. Especially the compositions are used for coatings, but not for spectacle lens materials, with a high refractive index. As a matter of course, the coating material obtained from WO 2018/122748 fails to deliver viscosity suitable for molding, mechanical strength needs for subsequent process of manufacturing spectacle lenses, e.g., trimming, polishing, etc.

Starting from EP 0 598 552 B1, it is an objective of the present invention is to provide a curable composition suitable for producing a spectacle lens material which has a high refractive index as well as a mechanical strength required for subsequent manufacturing process of spectacle lenses.

The present inventors discovered that by using the specific combination of bisphenol fluorene difunctional (meth)acrylate, monofunctional aromatic (meth)acrylate, and other (meth)acrylate, a curable composition having a high refractive index and a strong mechanical strength suitable for a spectacle lens material can be obtained.

The present invention is directed to a curable spectacle lens composition suitable for producing a spectacle lens comprising (i) bisphenol fluorene difunctional (meth)acrylate, (ii) monofunctional aromatic (meth)acrylate, and (iii) other (meth)acrylate.

The term "spectacle lens" refers to an ophthalmic lens worn in front of, but not in contact with, the eyeball (ISO 13666:2019(E), section 3.5.2), where an ophthalmic lens is a lens intended to be used for purposes of measurement, correction and/or protection of the eye, or for changing its appearance (ISO 13666:2019(E), section 3.5.1). Here, a spectacle lens includes, but not limited thereto, a corrective lens, protective lens, absorptive lens, clear lens, tinted lens, uniformly tinted lens, gradient-tinted lens, double gradient-tinted lens, photochromic lens, polarizing lens, balancing lens, matching lens, etc. as defined in Section 3.5.3 to 3.5.13 of DIN ISO 13666:2019. Further, according to Section 3.6 of DIN ISO 13666:2019, a spectacle lens can have various lens shapes including, but not limited thereto, curved-form lens, plano lens, spherical lens, cylindrical lens, spherocylindrical lens, toric lens, aspheric lens, atoric lens, etc. The term "spectacle lens" material refers to any material suitable for manufacturing the spectacle lens.

The term "(meth)acrylate" refers to monomeric acrylic and/or methacrylic esters of alcohols. (Meth)acrylate monomers and/or oligomers are referred to collectively herein as "(meth)acrylate." (Meth)acrylate of the present invention may include at least one (meth)acrylate, or a mixture thereof.

The bisphenol fluorene difunctional (meth)acrylate may be of any suitable type which fits into its definition.

Bisphenol fluorene difunctional (meth)acrylate may have the following formula I: 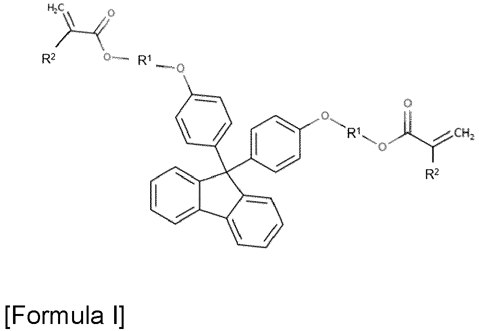 wherein R¹ is C₁-C₃ alkyl, and R² is H or CH₃.

It may be selected from bisphenol fluorene diacrylate or bisphenol fluorene dimethacrylate or mixtures thereof. In a preferred embodiment, bisphenol fluorene difunctional (meth)acrylate is a compound of formula I, wherein R¹ is C₁ or C₂ alkyl, or more preferably, R¹ is ethyl.

An example of commercially available bisphenol fluorene difunctional (meth)acrylate is HR6090 manufactured by Miwon Specialty Chemicals. In another preferred embodiment, bisphenol fluorene difunctional (meth)acrylate is bisphenol fluorene diacrylate have the following formula II.

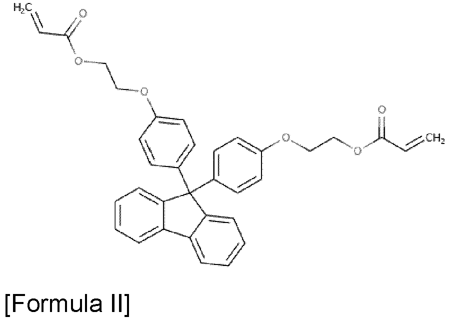

It is assumed that the bisphenol fluorene difunctional (meth)acrylate plays a critical role in the improvement of the mechanical properties of the obtained spectacle lenses as well as achieving a high refractive index. The present inventors surprisingly found that the bisphenol fluorene difunctional (meth)acrylate improves hardness and toughness of the produced spectacle lenses simultaneously. When no bisphenol fluorene difunctional (meth)acrylate is used, the tensile strength was not high enough to be used as a spectacle lens. This is completely different from the closest prior art EP 0 598 552 B1 using a urethane monomer to deliver physical toughness.

The present material further comprises a monofunctional aromatic (meth)acrylate used in combination with bisphenol fluorene difunctional (meth)acrylate. The monofunctional feature of the aromatic (meth)acrylate results in a more linear polymer chains which contributes to a lower degree of chain networking, which leads to low brittleness, higher toughness, better processibility and less breakage. In addition, the aromatic feature of the (meth)acrylate attributes to high refractive index. Wide range of monomers which fit into the definition of the term "monofunctional aromatic (meth)acrylate" are included here. The monofunctional aromatic (meth)acrylate may contain 1, 2, or 3 aromatic rings, preferably 2 or 3 aromatic rings. The monofunctional aromatic (meth)acrylate comprises a compound of Formula I: 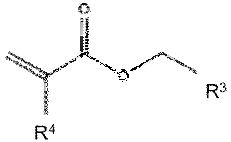 wherein R³ is a group comprising at least one aromatic substituent, preferably 1, 2, or 3 aromatic rings, more preferably 2 or 3 aromatic rings,, and R⁴ is hydrogen or methyl. Specifically, R³comprises a substituted or unsubstituted aromatic group of the type -CH₂-Ar, or a heteroatom linked aromatic group of the type -X-Ar, where X is S or O, and each Ar is independently a substituted or unsubstituted phenyl group, a fused aromatic group, or 2 or more alkyl group-linked phenyl or substituted phenyl or substituted phenyl groups. In one embodiment, monofunctional aromatic (meth)acrylate may further comprise any commonly used (meth)acrylate-based diluents.

For example, R³ can be at least one selected from the group consisting of:

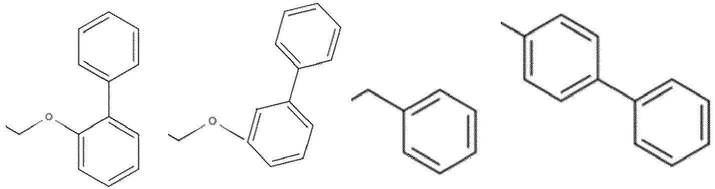

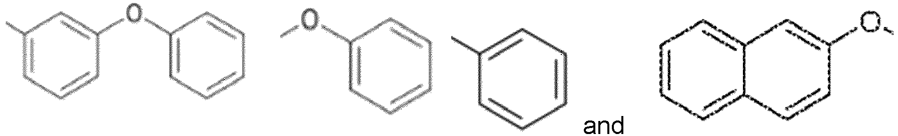

In a preferred embodiment, the monofunctional aromatic (meth)acrylate is selected from the group consisting of phenyl benzyl (meth)acrylate such as p- or o-pheny benzyl (meth)acrylate, phenylphenol C₁-C₃ (meth)acrylate such as p-, o-, or m-phenylphenol methyl or ethyl (meth)acrylate, benzyl (meth)acrylate, and phenoxy benzyl (meth)acrylate. By using the monofunctional (meth)acrylate monomers, especially the preferred ones, a correct final composition viscosity which can be easily filled into a mould for curing can be obtained.

The present curable spectacle lens material further comprises other (meth)acrylate. The term "other (meth)acrylate" refers to any (meth)acrylate which is neither bisphenol fluorene difunctional (meth)acrylate nor monofunctional aromatic (meth)acrylate.

For example, the other (meth)acrylate can be, but not limited thereto, monofunctional non-aromatic (meth)acrylate, difunctional non-aromatic or aromatic (meth)acrylate, multifunctional non-aromatic or aromatic (meth)acrylate, etc. In a further embodiment, the other (meth)acrylate may further comprise any commonly used (meth)acrylate-based diluents. For example, the other (meth)acrylate can be at least one selected from the group consisting of 1,3-butylene glycol diacrylate, 1,4 - butanediol diacrylate, diethylene glycol di(meth)acrylate, triethylene glycol di(meth)acrylate, 1,6-hexanediol di(meth)acrylate, neopentylglycol di(meth)acrylate, polyethylene glycol di(meth)acrylate, tetraethylene glycol di(meth)acrylate, triethylene glycol di(meth)acrylate, tripropylene glycol di(meth)acrylate, ethoxylated bisphenol A di(meth)acrylate, cyclohexane dimethanol di(meth)acrylate, dipropylene glycol di(meth)acrylate, acrylate ester (dioxane glycol di(meth)acrylate), alkoxylated hexanediol di(meth)acrylate, alkoxylated cyclohexane dimethanol di(meth)acrylate, alkoxylated di(meth)acrylate, tricyclodecane dimethanol di(meth)acrylate, propoxylated neopentylglycol di(meth)acrylate, alkoxylated neopentylglycol di(meth)acrylate, alkoxylated aliphatic di(meth)acrylate, trimethylolpropane tri(meth)acrylate, tris(2-hydroxyethyl) isocyanurate tri(meth)acrylate, pentaerythritol tri(meth)acrylate, ethoxylated trimethylolpropane tri(meth)acrylate, propoxylated trimethylolpropane tri(meth)acrylate, propoxylated glyceryl tri(meth)acrylate, pentaerythritol tetra(meth)acrylate, ditrimethylol propane tetra(meth)acrylate, ethoxylated pentaerythritol tetra(meth)acrylate, dipentaerythritol penta(meth)acrylate, butandiol di(meth)acrylate, hexandiol di(meth)acrylate, isobornyl (meth)acrylate. In a preferred embodiment, the other (meth)acrylate is at least one selected from the group consisting of diethylene glycol di(meth)acrylate (e.g., NK Ester 2G), tricyclodecane dimethanol di(meth)acrylate (e.g., DCPA) and thiodiethanethiol di(meth)acrylate (e.g., S2EG-A). By using additional (meth)acrylate monomers other than bisphenol fluorene difunctional (meth)acrylate and monofunctional aromatic (meth)acrylate, a correct final composition viscosity which can be easily filled into a mould for curing can be obtained.

Said specific combination of (meth)acrylates has been found by the present inventors to result in a composition showing excellent properties to be used for the production of spectacle lenses. The curable composition shows properties such as viscosity, etc., suitable for curing, and after curing, the obtained spectacle lens shows high refractive index which is critical for a spectacle lens material and a high tensile strength which enables subsequent processing of the lens, e.g., trimming, polishing, etc. If any one of the three are left out from a composition, it has been observed that at least one of the above properties required for spectacle lens materials cannot be achieved.

The curable composition has a viscosity suitable for the subsequent casting and curing process for producing a spectacle lens. The curable composition has a viscosity between 10 cp to 300 cp at 25°C, preferably 10 cp to 200 cp, more preferably 30 cp to 200 cp, most preferably 30 cp to 100 cp. However, existing resin materials do not satisfy this range as they do not aim for curing the resin material to produce a spectacle lens. If the material is too viscous, it cannot be casted due to difficulty in mixing and filling the casting moulds for producing a spectacle lens material, whereas if the viscosity is too low, the composition will leak from the mould leading to waste of materials.

The term "curable" means that the composition can be cured by UV radiation and/or heat. The curable spectacle lens composition according to the present invention is put into a casting mould and then is cured, typically with the application of heat or radiation, preferably UV light and a suitable initiator. For the subsequent curing process, the composition may further comprise at least one initiator, preferably, an initiator activated by light (UV, visible light, infrared, etc.) and/or heat. The curable composition according to the present invention may further comprise free radically polymerizable diluents, for example but not limited thereto, vinyl, allylic monomers or oligomers, etc.

The curable composition when casted and cured has a tensile strength which is suitable for use as a spectacle lens material. This means that the cured composition is suitable for cutting, edging, trimming, fitting steps of spectacle lens materials. The cured composition can be cut, edged and trimmed into a desired or predetermined shape and then fitted into a spectacle frame (including a rimless spectacle frame). In a preferred embodiment, the curable composition when casted and cured has a rimless tensile strength greater than 15 kg. The tensile strength is a material characteristic value for the evaluation of strength behavior. In the present invention, the rimless tensile strength of the cured composition is measured to check whether the cured composition has a tensile strength suitable to be used as a spectacle lens material. For this, the cured composition was observed whether it can be used as a spectacle lens material for a rimless spectacle frame. A hole is drilled into a cured composition sample having a thickness of 2mm, and then a hinge of a temple of a rimless spectacle lens frame was assembled to confirm the suitable rimless tensile strength of the sample. A wire was inserted into the hole of the sample and the rimless tensile strength was measured by pulling the cured composition until it breaks. The upper limit of the tensile strength is not particularly limited and may be between 20 and 80 kg, preferably between 30 and 80 kg, more preferably between 30 and 60 kg, and most preferably between 30 and 50 kg. When a cured composition has a high tensile strength, the material is very durable with excellent longevity. When the rimless tensile strength is not high enough to endure a weight of 15kg or less, the cured composition will be brittle and break in cutting, edging, trimming, and fitting processes, and thus will not be suitable for spectacle lens application. It was surprisingly found that the very combination of the (meth)acrylates, preferably with the specific amount range, of the present composition exhibits desired high refractive index and tensile strength at the same time, whereas a composition which lacks any one of these components or which uses these components in an improper range fails to do so.

The curable composition when casted and cured has a high refractive index of 1.57 or greater. In a preferred embodiment, the cured composition has a high refractive index of 1.58 or greater, 1.59 or greater, 1.60 or greater, 1.61 or greater, 1.62 or greater, 1.63 or greater, 1.64 or greater, or 1.65 or greater. In a more preferred embodiment, the cured composition has a high refractive index of 1.59 or greater, 1.60 or greater, 1.61 or greater, 1.62 or greater, 1.63 or greater, 1.64 or greater, or 1.65 or greater. In a most preferred embodiment, the cured composition has a high refractive index of 1.60 or greater, 1.61 or greater, 1.62 or greater, 1.63 or greater, 1.64 or greater, or 1.65 or greater.

Although EP 0 598 552 aims to provide a spectacle lens material with a high refractive index, it only was successful in obtaining a high refractive index in a range of 1.51 to 1.59, preferably 1.53 to 1.57. Moreover, EP 0 598 552 only focuses on the barcol hardness which is measured by applying a fixed force to a needle point and the depth of penetration, which is different from the tensile strength which affects the subsequent edging, trimming, cutting and fitting steps required to be used as spectacle lens material. The other relevant document WO 2018/122748 A1 (outside the technical field of the present invention) discloses that the refractive index of the cured composition can be at least 1.70, however, the composition is only suitable for a simple coating via inkjet printing, but not for casting and curing the composition to produce a spectacle lens material per se. As a matter of course, a thin coating and a spectacle lens material have completely different use and desired properties.

In one embodiment, the curable composition comprises bisphenol fluorene difunctional (meth)acrylate in an amount of 20% or greater by weight, based on the total weight of the curable composition. If the curable composition does not comprise enough bisphenol fluorene difunctional (meth)acrylate, the cured composition cannot deliver hardness and toughness required for spectacle lenses. For example, in such a case, the cured compositions are obtained as a soft and rubbery sample or breaks in the subsequent cutting, edging, trimming, fitting processes.

In a further embodiment, the curable composition comprises bisphenol fluorene difunctional (meth)acrylate in an amount from 20% to 40% by weight. Excessive amount of bisphenol fluorene difunctional (meth)acrylate may also lead to brittle spectacle lenses and easy breakage, depending on the content and formulation of the curable composition.

In a further embodiment, the curable composition comprises 20% to 40% by weight of bisphenol fluorene difunctional (meth)acrylate, 10 to 35% by weight of monofunctional aromatic (meth)acrylate, 10 to 60% by weight of other (meth)acrylate. % by weight in the present invention is calculated based on the total weight of the curable composition. The inventors have surprisingly found out that by using the respective (meth)acrylate with the above specified range, the composition exhibits properties even more suitable for casting, curing, cutting, edging, trimming, fitting processes for spectacle lens materials and/or spectacle lenses. For instance, using proper amount of the monofunctional aromatic (meth)acrylate leads to even more appropriate crosslinking density and brittleness for the produced spectacle lens. Excessive crosslinking density may make the cured composition too brittle for a spectacle lens material. The curable composition shows excellent final viscosity which makes filling of the composition into casting moulds even easier.

### EXAMPLES

Hereinafter, the embodiments of the present invention will be described in further detail. It should be understood, however, that the following examples are only for illustrative purposes and do not in any way restrict the present invention.

**Table 1. Abbreviations of the materials used in the examples**

| Abbr. | Chemical name | Potential supplier | Commercial name |
|---|---|---|---|
| B1 | o-Phenylphenolethyl acrylate | Miwon Speciality Chemical Co., Ltd | MIRAMER 1142 |
| B2 | Phenoxy benzyl acrylate | Miwon Speciality Chemical Co., Ltd | MIRAMER 1122 |
| B3 | p-Phenyl benzyl acrylate | Miwon Speciality Chemical Co., Ltd | MIRAMER 1192 |
| B4 | Benzyl methacrylate | Miwon Speciality Chemical Co., Ltd | MIRAMER 1183 |
| C1 | Diethylene glycol dimethacrylate | Shin-Nakamura Chemical Co., Ltd. | NK Ester 2G |
| C2 | Thiodiethanethiol diacrylate | Proprietary | |
| C3 | DCPA (tricyclodecane dimethanol diacrylate) | Kyoeisha Chemical | Light Acrylate DCP-A |

The viscosity was measured using Brookfield viscometer at temperatures of 25 °C and 60°C.

The refractive index was measured using Atago DR-M4 refractometer.

The rimless tensile strength was measured by drilling a hole into a sample of a cured composition having 2 mm thickness, and then assembling a hinge of a temple of a rimless spectacle lens frame to the sample. A wire was inserted into the hole of the sample. The rimless tensile strength was measured in tensile (tension) mode with a 5 kN load cell and extension rate of 2mm/min. The sample is pulled with this extension rate until it is broken, and maximum load (which is where the sample is broken) is recorded. The measurement was done for at least two samples and the average value thereof was reported.

Conversion (%) which shows the percentage of polymerizable functional groups was measured. A value close to 100% shows completion of curing. Conversion was measured by FTIR. The area under the peak related to the double bonds (reactive groups) was measured.

### Example 1

A curable composition was prepared by mixing 30% by weight of Miramer HR6090 manufactured by Miwon Speciality Chemical Co., Ltd.; 20% by weight of B1; and 25% by weight of C1 and 25% by weight of C2. As Miramer HR6090 is bisphenol fluorene difunctional acrylate oligomer diluted with 30% of acrylated resin, the curable composition comprises 21% of bisphenol fluorene difunctional acrylate oligomer.

To the mixture, 0.6% by weight of photoinitiator and 0.05% by weight of UV absorber were added with respect to the total weight of the mixture, and stirred for at least 30 minute to ensure complete dissolution of all components.

The viscosity of the thus-obtained curable composition was measured to be 43.9 and 10.2 cp at 25 °C and 60 °C, respectively. The composition was then moulded into flat-sheet spectacle lens moulds. The moulds were cured with a D Lamb UV light with the speed of 11 ft/min. After the UV curing, the samples were post cured at 120°C for 90 min. The conversion of polymerizable functional groups calculated by NIR was found to be 90.7%.

The d-line refractive index and the corresponding Abbe number was 1.6001, and 32, respectively. The e-line refractive index and the corresponding Abbe number was 1.6039 and 31.3, respectively. The average tensile strength of the cured composition was 27.2 kg. The cured composition showed yellow index, haze, density, UV-cutoff and water uptake suitable for spectacle lens.

### Example 2

A curable composition was prepared by mixing 40% by weight of Miramer HR6090; 30% by weight of B2; and 30% by weight of C1. As Miramer HR6090 is bisphenol fluorene difunctional acrylate oligomer diluted with 30% of acrylated resin, the curable composition comprises 28% of bisphenol fluorene difunctional acrylate oligomer.

To the mixture, 0.6% by weight of photoinitiator and 0.05% by weight of UV absorber were added with respect to the total weight of the mixture, and stirred for at least 30 minute to ensure complete dissolution of all components.

The viscosity of the thus-obtained curable composition was measured to be 54.7cp and 11.3 cp at 25 °C and 60 °C, respectively. The composition was then moulded into flat-sheet spectacle lens moulds. The moulds were cured with a D Lamb UV light with the speed of 11 ft/min. After the UV curing, the samples were post cured at 120°C for 90 min. The monomer conversion calculated by NIR was found to be 93.8%.

The d-line refractive index and the corresponding Abbe number was 1.5878, and 31.4, respectively. The e-line refractive index and the corresponding Abbe number was 1.5921 and 31.5, respectively. The average tensile strength of the cured composition was 38.4 kg. The cured composition showed yellow index, haze, density, UV-cutoff and water uptake suitable for spectacle lens.

### Example 3

A curable composition was prepared by mixing 30% by weight of Miramer HR6090; 30% by weight of B2; and 20% by weight of C1 and 20% by weight of C3. As Miramer HR6090 is bisphenol fluorene difunctional acrylate oligomer diluted with 30% of acrylated resin, the curable composition comprises 21% of bisphenol fluorene difunctional acrylate oligomer.

To the mixture, 0.6% by weight of photoinitiator and 0.05% by weight of UV absorber were added with respect to the total weight of the mixture, and stirred for at least 30 minute to ensure complete dissolution of all components.

The viscosity of the thus-obtained curable composition was measured to be 65 cp and 11.8 cp at 25 °C and 60 °C, respectively. The composition was then moulded into flat-sheet spectacle lens moulds. The moulds were cured with a D Lamb UV light with the speed of 11 ft/min. After the UV curing, the samples were post cured at 120°C for 90 min. The monomer conversion calculated by NIR was found to be 91.7%.

The d-line refractive index and the corresponding Abbe number was 1.5805, and 31.5, respectively. The e-line refractive index and the corresponding Abbe number was 1.5865 and 31.7, respectively. The average tensile strength of the cured composition was 30.6 kg. The cured composition showed yellow index, haze, density, UV-cutoff and water uptake suitable for spectacle lens.

### Example 4

A curable composition was prepared by mixing 30% by weight of Miramer HR6090; 30% by weight of B2; and 40% by weight of C3. As Miramer HR6090 is bisphenol fluorene difunctional acrylate oligomer diluted with 30% of acrylated resin, the curable composition comprises 21% of bisphenol fluorene difunctional acrylate oligomer.

To the mixture, 0.6% by weight of photoinitiator and 0.05% by weight of UV absorber were added with respect to the total weight of the mixture, and stirred for at least 30 minute to ensure complete dissolution of all components.

The viscosity of the thus-obtained curable composition was measured to be 155 cp and 20 cp at 25 °C and 60 °C, respectively. The composition was then moulded into flat-sheet spectacle lens moulds. The moulds were cured with a D Lamb UV light with the speed of 11 ft/min. After the UV curing, the samples were post cured at 120°C for 90 min. The monomer conversion calculated by NIR was found to be 90.5%.

The d-line refractive index and the corresponding Abbe number was 1.5855, and 31.8, respectively. The e-line refractive index and the corresponding Abbe number was 1.5904 and 32.3, respectively. The average tensile strength of the cured composition was 22.5 kg. The cured composition showed yellow index, haze, density, UV-cutoff and water uptake suitable for spectacle lens.

### Example 5

A curable composition was prepared by mixing 30% by weight of Miramer HR6090; 20% by weight of B3; and 25% by weight of C1 and 25% by weight of C2. As Miramer HR6090 is bisphenol fluorene difunctional acrylate oligomer diluted with 30% of acrylated resin, the curable composition comprises 21% of bisphenol fluorene difunctional acrylate oligomer.

To the mixture, 0.6% by weight of photoinitiator and 0.05% by weight of UV absorber were added with respect to the total weight of the mixture, and stirred for at least 30 minute to ensure complete dissolution of all components.

The viscosity of the thus-obtained curable composition was measured to be 42.5 cp and 9.5 cp at 25 °C and 60 °C, respectively. The composition was then moulded into flat-sheet spectacle lens moulds. The moulds were cured with a D Lamb UV light with the speed of 11 ft/min. After the UV curing, the samples were post cured at 120°C for 90 min. The monomer conversion calculated by NIR was found to be 92.4%.

The d-line refractive index and the corresponding Abbe number was 1.6033, and 29.8, respectively. The e-line refractive index and the corresponding Abbe number was 1.6082 and 30.6, respectively. The average tensile strength of the cured composition was 23.8 kg. The cured composition showed yellow index, haze, density, UV-cutoff and water uptake suitable for spectacle lens.

### Example 6

A curable composition was prepared by mixing 40% by weight of Miramer HR6090; 20% by weight of B4; and 15% by weight of C1 and 25% by weight of C2. As Miramer HR6090 is bisphenol fluorene difunctional acrylate oligomer diluted with 30% of acrylated resin, the curable composition comprises 21% of bisphenol fluorene difunctional acrylate oligomer.

To the mixture, 0.6% by weight of photoinitiator and 0.05% by weight of UV absorber were added with respect to the total weight of the mixture, and stirred for at least 30 minute to ensure complete dissolution of all components.

The viscosity of the thus-obtained curable composition was measured to be 35.7 cp and 8.5 cp at 25 °C and 60 °C, respectively. The composition was then moulded into flat-sheet spectacle lens moulds. The moulds were cured with a D Lamb UV light with the speed of 11 ft/min. After the UV curing, the samples were post cured at 120°C for 90 min. The monomer conversion calculated by NIR was found to be 90.8%.

The d-line refractive index and the corresponding Abbe number was 1.6043, and 29.2, respectively. The e-line refractive index and the corresponding Abbe number was 1.6092 and 29, respectively. The average tensile strength of the cured composition was 21.9 kg. The cured composition showed yellow index, haze, density, UV-cutoff and water uptake suitable for spectacle lens.

### Example 7

A curable composition was prepared by mixing 50% by weight of Miramer HR6090; 20% by weight of B4; and 30% by weight of C1. As Miramer HR6090 is bisphenol fluorene difunctional acrylate oligomer diluted with 30% of acrylated resin, the curable composition comprises 35% of bisphenol fluorene difunctional acrylate oligomer.

To the mixture, 0.6% by weight of photoinitiator and 0.05% by weight of UV absorber were added with respect to the total weight of the mixture, and stirred for at least 30 minute to ensure complete dissolution of all components.

The viscosity of the thus-obtained curable composition was measured to be 41.6 cp and 9.7 cp at 25 °C and 60 °C, respectively. The composition was then moulded into flat-sheet spectacle lens moulds. The moulds were cured with a D Lamb UV light with the speed of 11 ft/min. After the UV curing, the samples were post cured at 120°C for 90 min. The monomer conversion calculated by NIR was found to be 90.7%.

The d-line refractive index and the corresponding Abbe number was 1.5853, and 30.3, respectively. The e-line refractive index and the corresponding Abbe number was 1.5896 and 30.3, respectively. The average tensile strength of the cured composition was 23.5 kg. The cured composition showed yellow index, haze, density, UV-cutoff and water uptake suitable for spectacle lens.

### Example 8

A curable composition was prepared by mixing 35% by weight of Miramer HR6090; 25% by weight of B1; and 40% by weight of C1. As Miramer HR6090 is bisphenol fluorene difunctional acrylate oligomer diluted with 30% of acrylated resin, the curable composition comprises 24.5% of bisphenol fluorene difunctional acrylate oligomer.

To the mixture, 0.6% by weight of photoinitiator and 0.05% by weight of UV absorber were added with respect to the total weight of the mixture, and stirred for at least 30 minute to ensure complete dissolution of all components.

The viscosity of the thus-obtained curable composition was measured to be 47 cp and 10.5 cp at 25 °C and 60 °C, respectively. The composition was then moulded into flat-sheet spectacle lens moulds. The moulds were cured with a D Lamb UV light with the speed of 11 ft/min. After the UV curing, the samples were post cured at 120°C for 90 min. The monomer conversion calculated by NIR was found to be 90.1 %.

The d-line refractive index and the corresponding Abbe number was 1.5815, and 30.4, respectively. The e-line refractive index and the corresponding Abbe number was 1.5859 and 30.8, respectively. The average tensile strength of the cured composition was 27.2 kg. The cured composition showed yellow index, haze, density, UV-cutoff and water uptake suitable for spectacle lens.

The test results of Examples 1 to 8 are summarized in Table 2 below.

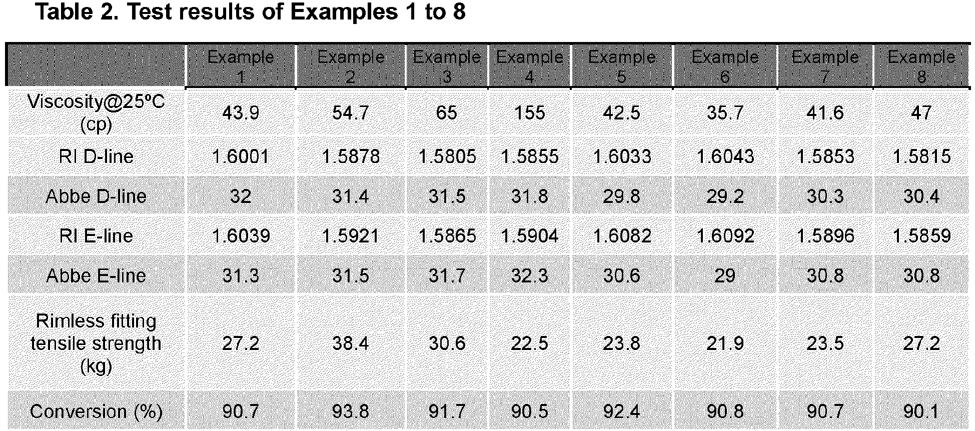

All formulations in the examples showed proper properties suitable for the subsequent steps of casting and curing for producing a spectacle lens. The formulation in the examples showed viscosity appropriate to be casted into a spectacle lens mould, and the produced spectacle lenses by UV curing showed a high refractive index greater than 1.58 and rimless fitting tensile strength greater than 15kg. Further, all cured compositions of Examples 1 to 8 showed yellow index, haze, density, UV-cutoff and water uptake suitable for the use as a spectacle lens material.

### COMPARATIVE EXAMPLES

### Comparative Example 1

A comparative composition was prepared by mixing 75% by weight of Light acrylate 1.6 HX-A (1,6-hexanediol diacrylate) and 25% by weight of NK oligo U4HA (polyfunctional urethane acrylate). This composition comprises neither monofunctional (meth)acrylate nor bisphenol fluorene difunctional (meth)acrylate.

The processes used in Examples 1 to 8 were used for casting and curing the mixture. The d-line refractive index of the cured composition was only around 1.5097, far lower than the lowest refractive index 1.5805 of the cured composition of Examples 1 to 8. Moreover, the rimless fitting tensile strength turned out to be 9.7kg, which is too brittle to be used as a spectacle lens.

### Comparative Example 2

A comparative composition was prepared by mixing 75% by weight of Light acrylate 1.6 HX-A (1,6-hexanediol diacrylate) and 25% by weight of NK oligo U4HA (polyfunctional urethane acrylate). This composition comprises neither monofunctional (meth)acrylate nor bisphenol fluorene difunctional (meth)acrylate.

The processes used in Examples 1 to 8 were used for casting and curing the mixture. The d-line refractive index of the cured composition was only 1.5070, far lower than the lowest refractive index 1.5805 of the cured composition of Examples 1 to 8. Moreover, the rimless fitting tensile strength turned out to be 12.3kg, which is too brittle to be used as a spectacle lens.

The following Comparative Examples 3 to 10 were carried out to confirm the optimal amount of each of (meth)acrylate components of the present invention.

### Comparative Example 3

A comparative curable composition was prepared by mixing 8% by weight of Miramer HR6090; 55% by weight of B3; and 37% by weight of C1. As Miramer HR6090 is bisphenol fluorene difunctional acrylate oligomer diluted with 30% of acrylated resin, the curable composition comprises 5.6% of bisphenol fluorene difunctional acrylate oligomer.

The processes used in Examples 1 to 8 were used for casting and curing the mixture.

The viscosity of the thus-obtained curable comparative composition was measured to be 17.6 cp and 5.1 cp at 25 °C and 60 °C, respectively. The composition was then moulded into flat-sheet spectacle lens moulds and cured. The monomer conversion calculated by NIR was found to be 94.5 %.

The d-line refractive index and the corresponding Abbe number was 1.5817 and 29.1, respectively. The e-line refractive index and the corresponding Abbe number was 1.5956 and 28.8, respectively. The cured composition broke in cutting and edging process and was turned out to be not suitable for spectacle lens. The average tensile strength of the cured composition was estimated to be less than 8kg.

Apparently, less amount of bisphenol fluorene difunctional (meth)acrylate resulted in unacceptable tensile strength of the cured spectacle lens and even decreased refractive index.

### Comparative Example 4

A comparative composition was prepared by mixing 8% by weight of Miramer HR6090; 47% by weight of B2 and 45% by weight of B4. No other (meth)acrylate was added. As Miramer HR6090 is bisphenol fluorene difunctional acrylate oligomer diluted with 30% by weight of acrylated resin, the composition comprises 5.6% by weight of bisphenol fluorene difunctional acrylate oligomer.

The process used in Examples 1 to 8 was used for casting and curing the mixture.

The viscosity of the thus-obtained comparative composition was measured to be 7.2 cp and 3.2 cp at 25 °C and 60 °C, respectively. The composition was then moulded into flat-sheet spectacle lens moulds. The moulds were cured with a D Lamb UV light with the speed of 11 ft/min. After the UV curing, the samples were post cured at 120°C for 90 min.

The cured composition was observed to have too low glass transition temperature, which is below room temperature. It was thus produced as a soft gelly type and does not have free standing. The monomer conversion measured by NIR did not exceed higher than 18% even after 8 UV passes. As the curing has failed, neither refractive index nor tensile strength was able to be measured. It was not able to produce a spectacle lens with this curable composition.

From Comparative Example 4, it is assumed that the other (meth)acrylate plays an important role in the properties of the cured composition. Further, the combination of the specific three types of (meth)acylates as well as the amount thereof is critical in achieving the desired properties of the cured composition. The amount of monofunctional aromatic (meth)acrylate which is 92% by weight and the amount of bisphenol fluorene difunctional (meth)acrylate which is 5.6% by weight appears to the relevant to the failed result. The reason was assumed to attribute to very high level of monofunctional acrylates in the composition. Monofunctional acrylates compared to multifunctional acrylates have a lower reactivity and thus reaching a high conversion for these systems could be difficult.

### Comparative Example 5

A comparative curable composition was prepared by mixing 8% by weight of Miramer HR6090; 45% by weight of B1 and 47% by weight of B3. No other (meth)acrylate was added. As Miramer HR6090 is bisphenol fluorene difunctional acrylate oligomer diluted with 30% of acrylated resin, the curable composition comprises 5.6% of bisphenol fluorene difunctional acrylate oligomer.

The processes used in Examples 1 to 8 were used for casting and curing the mixture.

The viscosity of the thus-obtained curable comparative composition was measured to be 2.6 cp and 7.5 cp at 25 °C and 60 °C, respectively. The composition was then moulded into flat-sheet spectacle lens moulds and cured.

The cured composition was observed to have a glass transition temperature, which is below the room temperature. A rubbery cured sample was obtained. At temperatures above 40 to 50°C, the sample behaved like an adhesive. The monomer conversion calculated by NIR was found to be 84%. It was obvious that this cured composition cannot be used to produce a spectacle lens. No meaningful tensile strength was expected, and thus not measured. On the other hand, the d-line refractive index and the corresponding Abbe number was 1.6215, and 26.2, respectively. The e-line refractive index and the corresponding Abbe number was 1.6299 and 27.1, respectively.

From Comparative Example 5, it is assumed that the other (meth)acrylate plays an important role in the properties of the cured composition, and the combination of the specific three types of (meth)acylates as well as the amount thereof is critical in achieving the desired properties of the cured composition.

### Comparative Example 6

A comparative composition was prepared by mixing 95% by weight of Miramer HR6090; and 5% by weight of B4. No other (meth)acrylate was added. As Miramer HR6090 is bisphenol fluorene difunctional acrylate oligomer diluted with 30% of acrylated resin, the curable composition comprises 66.5% of bisphenol fluorene difunctional acrylate oligomer.

The processes used in Examples 1 to 8 were used for casting and curing the mixture.

The viscosity of the thus-obtained composition was measured to be 9700 cp and 840 cp at 25 °C and 60 °C, respectively. The composition was too viscous and could not be casted due to difficulty in mixing and filling the spectacle lens moulds. It was not suitable for casting as well as application to spectacle lenses. It is understood that too high amount of bisphenol fluorene difunctional (meth)acrylate, too low amount of monofunctional aromatic (meth)acrylate, and/or absence of other (meth)acrylate would result in unacceptable composition. The combination of all three types of (meth)acrylate is crucial for the present invention.

### Comparative Example 7

A comparative curable composition was prepared by mixing 50% by weight of Miramer HR6090; and 50% by weight of C1. No monofunctional aromatic (meth)acrylate was added. As Miramer HR6090 is bisphenol fluorene difunctional acrylate oligomer diluted with 30% of acrylated resin, the curable composition comprises 35% of bisphenol fluorene difunctional acrylate oligomer.

The process used in Examples 1 to 8 was used for casting and curing the mixture.

The viscosity of the thus-obtained curable comparative composition was measured to be 53 cp and 11.2 cp at 25 °C and 60 °C, respectively. The composition was then moulded into flat-sheet spectacle lens moulds and cured.

The d-line refractive index and the corresponding Abbe number was 1.5719, and 33.4, respectively. The e-line refractive index and the corresponding Abbe number was 1.5746 and 34.5, respectively. However, the cured composition broke in cutting and edging process and was turned out to be not suitable for spectacle lens. The average tensile strength of the cured composition was estimated to be less than 8kg. Apparently, incomplete combination of (meth)acylates and/or excessive amount of bisphenol fluorene difunctional (meth)acrylate adversely affects the tensile strength of the composition.

### Comparative Example 8

A curable comparative composition was prepared by mixing 25% by weight of Miramer HR6090; and 37.5% by weight of B2 and 37.5% by weight of B3. No other (meth)acrylate was added. As Miramer HR6090 is bisphenol fluorene difunctional acrylate oligomer diluted with 30% of acrylated resin, the curable composition comprises 17.5% of bisphenol fluorene difunctional acrylate oligomer.

The processes used in Examples 1 to 8 was used for casting and curing the mixture.

The viscosity of the thus-obtained curable comparative composition was measured to be 65 cp and 11.8 cp at 25 °C and 60 °C, respectively. The composition was then moulded into flat-sheet spectacle lens moulds and cured. The monomer conversion calculated by NIR was found to be 85.7 %. Relatively soft and rubbery sample with a low glass transition temperature was obtained and determined to be not suitable for spectacle lens material. According to visual inspection, tensile strength was also determined to be not high enough to be used as spectacle lens.

Apparently, it is understood that incomplete combination of (meth)acylates and/or using bisphenol fluorene difunctional (meth)acrylate with an amount less than 20% by weight adversely affects the tensile strength of the composition. Further, it is assumed that using an excessive amount of monofunctional aromatic (meth)acrylate may adversely affect the tensile strength.

### Comparative Example 9

A curable comparative composition was prepared by mixing 25% by weight of Miramer HR6090; 50% by weight of B2; and 25% by weight of C1. As Miramer HR6090 is bisphenol fluorene difunctional acrylate oligomer diluted with 30% of acrylated resin, the curable composition comprises 17.5% of bisphenol fluorene difunctional acrylate oligomer. The processes used in Examples 1 to 8 were used for casting and curing the mixture.

The viscosity of the thus-obtained curable comparative composition was measured to be 32 cp and 8 cp at 25 °C and 60 °C, respectively. The composition was then moulded into flat-sheet spectacle lens moulds and cured. The monomer conversion calculated by NIR was found to be 91.4 %.

The d-line refractive index and the corresponding Abbe number was 1.5919, and 29.4, respectively. The e-line refractive index and the corresponding Abbe number was 1.5957 and 30.4, respectively. The cured composition broke during cutting and edging processes and turned out to be not suitable for spectacle lenses. The average tensile strength of the cured composition was estimated to be significantly low.

From the above result, it is understood that bisphenol fluorene difunctional (meth)acrylate less than 20% by weight may attribute to unacceptable tensile strength of the cured composition, not allowing the cured composition to be used as a spectacle lens.

### Comparative Example 10

A curable comparative composition was prepared by mixing 60% by weight of Miramer HR6090; 30% by weight of B4; and 10% by weight of C1. As Miramer HR6090 is bisphenol fluorene difunctional acrylate oligomer diluted with 30% of acrylated resin, the curable composition comprises 42% of bisphenol fluorene difunctional acrylate oligomer. The processes used in Examples 1 to 8 were used for casting and curing the mixture.

The viscosity of the thus-obtained curable comparative composition was measured to be 71.8 cp and 13.3 cp at 25 °C and 60 °C, respectively. The composition was then moulded into flat-sheet spectacle lens moulds and cured. The monomer conversion calculated by NIR was found to be 89.5 %.

The cured composition showed desired high refractive index where the d-line refractive index and the corresponding Abbe number was 1.6002, and 28.7, respectively; and the e-line refractive index and the corresponding Abbe number was 1.6049 and 30.4, respectively. Nonetheless, the cured composition was brittle and broke during cutting and edging processes. It turned out to be not suitable for spectacle lenses. The average tensile strength of the cured composition was expected to be fairly low, not allowing the cured composition to be used as a spectacle lens.

From the above result, it is understood that bisphenol fluorene difunctional (meth)acrylate greater than 40% by weight may attribute to unacceptable tensile strength of the cured composition.

The test results of Comparative examples 3 to 10 are summarized in Table 3 below.

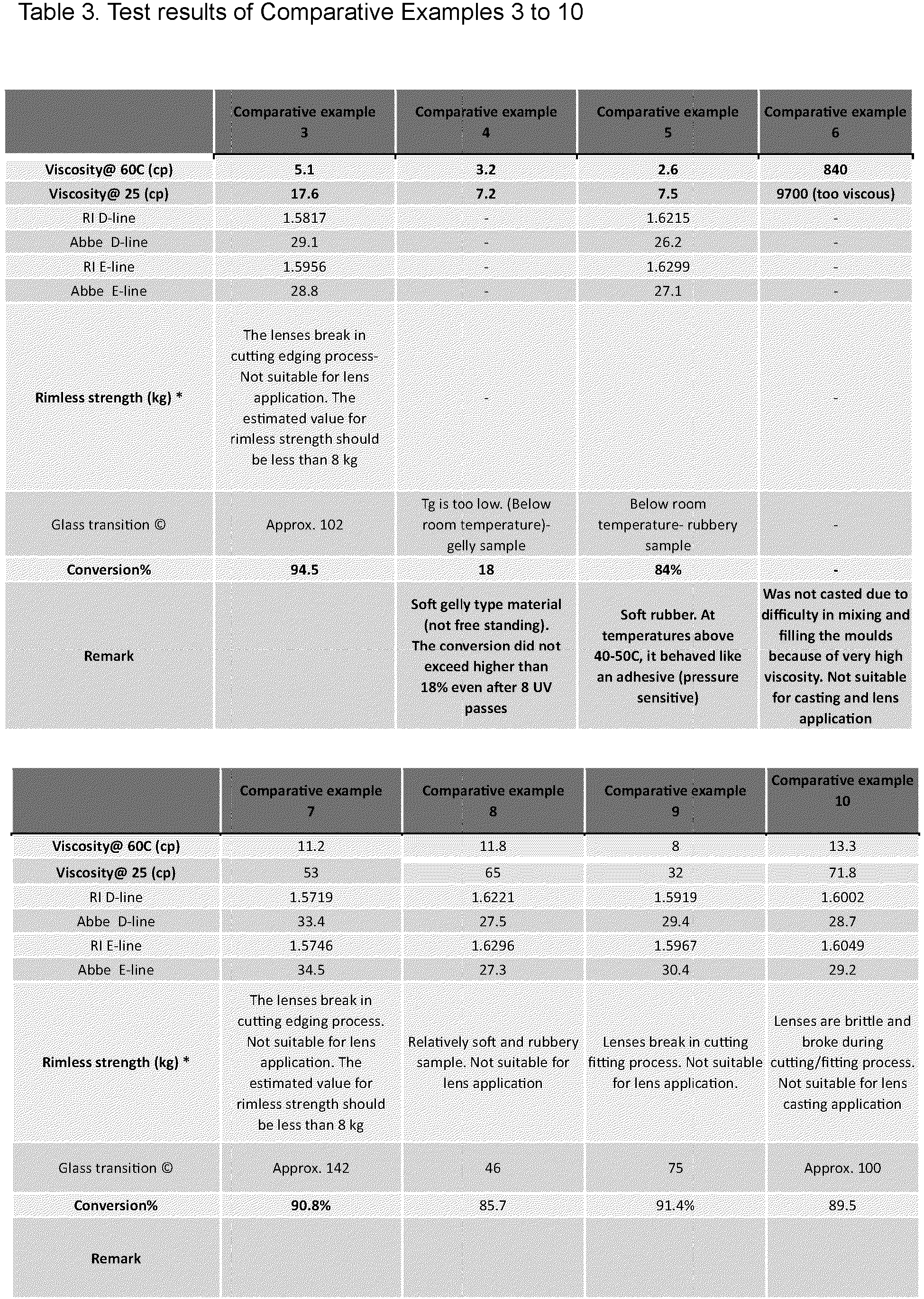

## Claims

1. A curable composition suitable for producing a spectacle lens material, **characterized by** comprising:
bisphenol fluorene difunctional (meth)acrylate, monofunctional aromatic (meth)acrylate, and
other (meth)acrylate.

2. The curable composition according to claim 1,
**characterized in that** the cured composition has a tensile strength suitable for a use as a spectacle lens material.

3. The curable composition according to claim 1 or 2,
**characterized in that** the cured composition has a high refractive index 1.57 or greater, or 1.58 or greater, or 1.59 or greater, or 1.60 or greater.

4. The curable composition according to claim 3,
**characterized in that** the cured composition has a high refractive index of 1.60 or greater.

5. The curable composition according to any one of claims 1 to 4,
**characterized in that** the curable composition has a viscosity between 10 cp to 300 cp at 25°C, or between 10 cp to 200 cp at 25°C.

6. The curable composition according to any one of the preceding claims, **characterized by** comprising
20 to 40% by weight of bisphenol fluorene difunctional (meth)acrylate.

7. The curable composition according to claim 6,
**characterized by** further comprising
10 to 40% by weight, or 20 to 40% by weight of monofunctional aromatic (meth)acrylate, and
10 to 60% by weight, or 40 to 60% by weight of other (meth)acrylate.

8. The curable composition according to any one of the preceding claims, **characterized by** comprising
20 to 40% by weight of bisphenol fluorene difunctional (meth)acrylate,
10 to 40% by weight of monofunctional aromatic (meth)acrylate, and
10 to 60% by weight of other (meth)acrylate.

9. The curable composition according to any one of the preceding claims, **characterized in that** bisphenol fluorene difunctional (meth)acrylate comprises bisphenol fluorene difunctional acrylate.

10. The curable composition according to any one of the preceding claims, **characterized in that** bisphenol fluorene difunctional (meth)acrylate comprises acrylate of formula I:

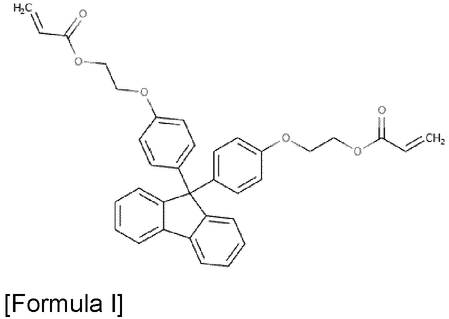

11. The curable composition according to any one of the preceding claims, **characterized in that** monofunctional aromatic (meth)acrylate comprises at least one selected from the group consisting of benzyl (meth)acrylate, phenyl benzyl (meth)acrylate, and phenylphenol C₁-C₃ alkyl (meth)acrylate.

12. The curable composition according to any one of the preceding claims, **characterized in that** other (meth)acrylate comprises at least one selected from the group consisting of diethylene glycol di(meth)acrylate, tricyclodecane dimethanol di(meth)acrylate and thiodiethanethiol di(meth)acrylate.

13. The curable composition according to any one of the preceding claims, **characterized in that**
bisphenol fluorene difunctional (meth)acrylate is bisphenol fluorene diacrylate, monofunctional aromatic (meth)acrylate is phenoxy benzyl acrylate), and
other (meth)acrylate is diethylene glycol dimethacrylate.

14. A spectacle lens consisting of a cured composition,
**characterized in that** the cured composition is cured by using a curable composition according to any one of the preceding claims.

15. A method for producing a spectacle lens comprising:
casting the curable composition according to any one of claims 1 to 13, and
curing the curable composition, and
optionally, cutting, edging, and/or trimming the cured composition into a predetermined shape.
